# FASCICULE DE BREVET EUROPEEN

(11) **EP 3 776 794 B1**
(45) Date de publication et mention de la délivrance du brevet: **10.07.2024**
(21) Numéro de dépôt: 19717126.7
(22) Date de dépôt: 20.03.2019
(51) Int. Cl.: H02J 7/00

(54) **SYSTEME DE BATTERIE RECHARGEABLE POUR UN VEHICULE**
WIEDERAUFLADBARES BATTERIESYSTEM FÜR EIN FAHRZEUG
RECHARGEABLE BATTERY SYSTEM FOR A VEHICLE

(30) Priorité: 05.04.2018 FR 1852944
(43) Date de publication de la demande: 17.02.2021
(73) Titulaire: Stellantis Auto SAS, 78300 Poissy (FR)
(72) Inventeur: MIZWICKI, Eric, 95180 Menucourt (FR); ATI, Mohamed, 78100 St Germain en Laye (FR)
(86) Numéro de dépôt international: PCT/FR2019/050626
(87) Numéro de publication internationale: WO 2019/193262

(56) Documents cités:
- WO-A1-2012/063385
- CN-A- 104 079 001
- CN-A- 107 154 780
- DE-A1- 102016 201 520
- FR-A1- 3 029 025
- JP-A- 2013 038 910
- US-A1- 2015 123 481
- US-A1- 2020 295 572

## Description

Le domaine de l'invention concerne les systèmes de batterie de véhicule, préférentiellement pour les véhicules automobiles électriques et les véhicules hybrides électriques.

Conventionnellement, les systèmes de batterie comportent un ou plusieurs sous-systèmes de batteries pouvant être agencés en montage série et/ou parallèle en fonction des besoins électriques de l'architecture du véhicule en terme de tension d'alimentation des équipements et des performances d'autonomie de roulage recherchées en mode électrique. Par ailleurs, un sous-système de batterie est le plus souvent constitué de plusieurs cellules élémentaires, elles-mêmes disposées en série et/ou en parallèle pour augmenter la tension et le courant électrique du sous-système. On entend ici par le terme sous-système de batterie, une unité électrique servant au stockage et à la restitution d'énergie électrique pouvant être adressée à ses bornes individuellement par une interface électrique (interface consommatrice destinée à recevoir de l'énergie électrique du sous-système et par une interface de recharge destinée à transmettre de l'énergie électrique au sous-système).

Le document EP3188342A1 illustre par exemple un système de batterie comportant plusieurs sous-systèmes pouvant être rechargés individuellement par une interface de recharge. Il propose un système et procédé de recharge permettant de déterminer la tension et le courant optimal de chacun des sous-systèmes pour opérer une recharge électrique par l'interface de recharge.

Par ailleurs, du fait de la diversité des architectures électriques automobiles les organismes de standardisation ont classifié les bornes de recharge électrique en plusieurs niveaux de classes définis par des tensions de recharge, courant, puissance supportés, ainsi que les standard de communication compatible. A cet effet, il a été défini les classes de puissance suivantes listées ici selon des valeurs de puissance croissante allant de 10kW à plus de 350kW: FC10, FC20, FC50, HPC150, HPC250, HPC350.

Afin d'améliorer la mobilité d'un véhicule électrique rechargeable, il est nécessaire d'une part que le véhicule soit compatible avec la plupart des technologies des bornes de recharge et d'autre part que le véhicule puisse bénéficier de la puissance de recharge maximale d'une borne pour réduire le temps de recharge. Un objectif de l'invention est donc d'améliorer l'interopérabilité du système de batterie pour bénéficier d'une puissance de recharge maximale. Un autre objectif de l'invention est de proposer un système de batterie rechargeable compact.

Par ailleurs, les systèmes de batteries comportant des sous-systèmes de batterie individuels pouvant être sollicités en charge et décharge asymétriquement posent le problème de la gestion du vieillissement du système dans son ensemble. En effet, il est nécessaire pour éviter un vieillissement prématuré d'un système de batterie que les sollicitations électriques entre les sous-systèmes de batteries soient homogènes au cours de la durée de vie d'un véhicule. Or, typiquement les équipements embarqués du véhicule, notamment le système de régulation thermique d'un système de batterie est alimenté lors d'une recharge par le même sous-système de batterie. Cette configuration entraîne au fil du temps un déséquilibre en vieillissement. Un autre objectif de l'invention est donc d'empêcher un vieillissement prématuré d'un système de batterie comportant des sous-systèmes connectés en parallèle.

Plus précisément, l'invention concerne un système de batterie rechargeable pour un véhicule, le système comprenant au moins deux sous-systèmes de batteries pourvus chacun de deux bornes de connexion, des moyens de commande, au moins une interface de recharge susceptible d'opérer une recharge à une première tension de recharge, au moins une interface consommatrice susceptible d'opérer à une première tension d'alimentation déterminée, et un dispositif de régulation thermique des au moins deux sous-systèmes de batteries, les moyens de commande étant aptes à connecter en parallèle les bornes desdits au moins deux sous-systèmes de batterie à l'interface de recharge lors d'une recharge du système de batterie et à l'interface consommatrice. Selon l'invention, les moyens de commande sont aptes en outre à connecter en série les bornes desdits au moins deux sous-systèmes de batterie à l'interface de recharge lorsqu'une recharge du système de batterie par l'interface de recharge est commandée à une deuxième tension de recharge déterminée et à l'interface consommatrice pour fournir une deuxième tension d'alimentation déterminée, l'interface consommatrice (63) étant un convertisseur de tension (731) alimentant le dispositif de régulation thermique.

Plus précisément, les moyens de commande comportent un moyen de commutation électronique reliant une première borne d'un desdits au moins deux sous-systèmes de batterie à une deuxième borne, de pôle opposé à la première borne, d'un autre desdits au moins deux sous-systèmes de batterie.

Selon une variante, les moyens de commande sont configurés pour alimenter sélectivement l'interface consommatrice, lors d'une recharge commandée à la deuxième tension, par un seul desdits au moins deux sous-systèmes de batterie.

Selon une variante, les moyens de commande sont configurés pour sélectionner le sous-système de batterie sollicité pour l'alimentation de l'interface consommatrice, parmi lesdits au moins deux sous-systèmes de batterie, en fonction d'une température estimée de chacun desdits au moins deux sous-systèmes de batterie et d'un seuil de protection de température.

Selon une variante, les moyens de commande sont configurés pour sélectionner le sous-système de batterie sollicité pour l'alimentation de l'interface consommatrice, parmi lesdits au moins deux sous-systèmes de batterie, en fonction d'un signal permettant d'identifier quel sous-système, parmi les au moins deux sous-systèmes de batterie, a été sollicité lors de la recharge précédente.

Selon une variante, les moyens de commande sont configurés en outre pour alimenter, lors du roulage, l'interface consommatrice par les au moins deux sous-systèmes de batterie connectés en série lorsque les sous-systèmes de batterie atteignent un seuil d'état de charge prédéterminé.

Selon une variante, la tension de fonctionnement de chacun des au moins deux sous-systèmes de batterie est comprise entre 200V et 450V et la tension de fonctionnement des au moins deux sous-systèmes de batterie lorsqu'ils sont connectés en série est comprise entre 400V et 1000V.

Selon une variante, le système comporte au moins deux interfaces consommatrices, une première interface étant destinée à être reliée électriquement à une machine de traction électrique du véhicule et une deuxième interface étant le convertisseur de tension.

Selon une variante, chacune des interfaces consommatrices est apte à fonctionner à une tension comprise entre 200V et 1000V, ou à une tension de 48V.

Il est prévu selon l'invention un véhicule automobile comportant un système de batterie selon l'un quelconque des modes de réalisation précédents.

L'invention prévoit également un procédé de contrôle du système de batterie rechargeable comportant, lors de l'activation d'une recharge opérée par l'intermédiaire de l'interface de recharge à la deuxième tension, la connexion desdits au moins deux sous-systèmes de batterie en série à l'interface de recharge. Le procédé comporte également lors de la détection d'un besoin d'augmentation de la tension électrique pour alimenter des équipements connectés électriquement au système de batterie, la connexion desdits au moins deux sous-systèmes de batterie en série aux interfaces consommatrices du système de batterie.

Selon une variante du procédé, la connexion en série des au moins deux sous-systèmes de batterie comporte le pilotage d'un moyen de commutation électronique dans un état fermé, ledit moyen de commutation reliant directement une première borne d'un desdits au moins deux sous-systèmes de batterie à une deuxième borne, de pôle opposé à la première borne, d'un autre desdits au moins deux sous-systèmes de batterie.

Selon une variante de l'invention, ce procédé comporte, lors de l'activation d'une recharge opérée par l'intermédiaire de l'interface de recharge à la deuxième tension, la connexion desdits au moins deux sous-systèmes de batterie en série à l'interface de recharge et, en cas de détection d'une condition d'activation du dispositif de régulation thermique, comprend une étape pour commander l'alimenter du dispositif de régulation thermique à la deuxième tension d'alimentation déterminée ou à la première tension d'alimentation déterminée selon respectivement que le procédé détecte un besoin d'augmentation de la tension électrique pour alimenter l'interface consommatrice ou pas.

Selon une variante de l'invention, l'interface consommatrice étant alimenté à la première tension d'alimentation déterminée, ce procédé arbitre le choix du sous-système de batterie pour l'alimentation de l'interface consommatrice en fonction d'un état de vieillissement et d'une température de chacun des sous-systèmes du système de batterie.

L'invention propose un système de batterie comprenant deux sous-systèmes de batterie ou plus pouvant être connectés en parallèle ou en série et ayant un nombre optimal de connecteurs et de relais permettant d'opérer une recharge à une haute tension (jusqu'à 1000V) tout en alimentant pendant la recharge des équipements du véhicule à une tension inférieure. L'invention assure également un vieillissement homogène des sous-systèmes de batterie tout au long de la vie du système de batterie en alternant les sous-systèmes sollicités lors d'une recharge et d'une recharge à l'autre. Par ailleurs, l'invention permet d'assurer un fonctionnement dégradé de la machine de traction du véhicule lorsqu'un des deux sous-systèmes de batterie est défaillant en maintenant connecté l'autre sous-système. Un autre avantage est la compatibilité du système de batterie avec des équipements fonctionnant à une tension pouvant atteindre 1000V par simple reconfiguration des relais de puissance sans recours à un convertisseur de tension. On améliore ainsi la compatibilité de l'architecture électrique du système de batterie avec des équipements électriques de tension plus élevée. De plus, lorsqu'un état de charge bas est atteint, l'architecture du système de batterie permet de connecter les sous-systèmes de batterie en série pour procurer un effet d'augmentation de la puissance électrique (dit effet « Boost » en anglais).

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente schématiquement un véhicule automobile comportant un système de batterie rechargeable selon l'invention ;
- la figure 2 représente schématiquement un module de cellules électriques disposées dans un sous-système de batterie individuel du système de batterie ;
- la figure 3 représente un schéma électrique du système de batterie selon l'invention ;
- la figure 4 est un diagramme représentant un algorithme du procédé de contrôle du système de batterie selon l'invention permettant d'assurer un vieillissement homogène des sous-systèmes de batterie.

L'invention concerne les systèmes de batteries et de préférence pour des applications de forte puissance pouvant atteindre des puissances de 350KW et fonctionnant à des tensions allant de plusieurs dizaines de Volts (48V) à plusieurs centaines de Volts (950V environ). L'invention s'applique préférentiellement aux systèmes de batteries pour véhicules électriques et hybrides électriques pouvant être équipés d'une interface de recharge à une borne de recharge externe au véhicule.

L'invention vise à permettre l'interopérabilité du système de batterie avec les diverses classes de puissance normalisées de bornes de recharge, notamment en permettant une recharge à une tension de recharge élevée de l'ordre de 800V à 1000V tout en alimentant une interface du système de batterie à une tension d'alimentation inférieure. Un objectif de l'invention est d'améliorer la compatibilité du système de batterie avec les véhicules destinés à l'embarquer. Un autre objectif de l'invention d'assurer un vieillissement homogène des sous-systèmes de batterie formant le système de batterie.

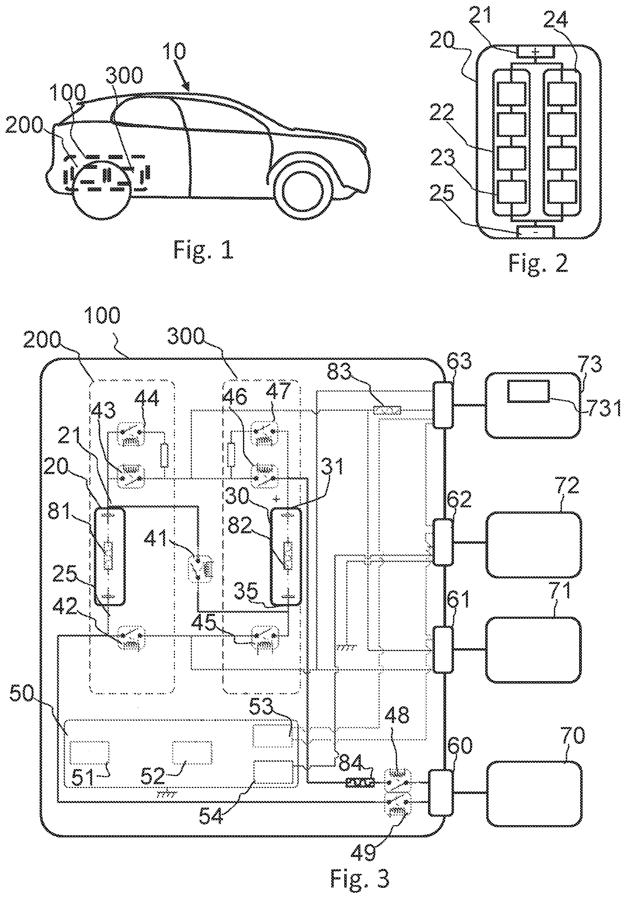

La figure 1 représente schématiquement un véhicule automobile 10 équipé d'un système de batterie rechargeable 100 muni de deux sous-systèmes de batterie 200, 300. Il est envisageable que le système de batterie comprenne trois sous-systèmes de batterie ou plus. Les sous-systèmes de batteries sont configurables en montage parallèle pour alimenter les équipements électroniques du véhicule à une tension d'alimentation déterminé, par exemple comprise entre 200V et 450V, mais aussi conformément à l'invention en montage série de manière à permettre l'opération d'une recharge électrique du système de batterie 100 à une tension de recharge supérieure à la tension d'alimentation des équipements, par exemple pouvant atteindre 1000V environ.

La figure 2 représente schématiquement un module de cellules électriques du sous-système de batterie 200 (identique au sous-système 300) et vise à définir les termes « système de batterie » et « sous-système de batterie ». Couramment, on désigne le système de batterie par le terme anglais « battery pack » et les sous-systèmes de batteries par le terme anglais « half-pack » dans le cas d'une application à deux sous-systèmes de batterie ou plus généralement « sub-pack ». On entend dans la description qu'un système de batterie peut être équipé d'une pluralité de sous-systèmes de batterie permettant le stockage et la restitution d'énergie électrique et dont les connexions électriques sont configurables par des moyens de commande de manière à permettre leur montage en série et/ou en parallèle en fonction de la tension et du courant électrique recherchés.

Plus précisément, le sous-système de batterie 200 comporte un module 20 de cellules électriques unitaires, ce module 20 pouvant être adressé individuellement par le système de batterie. Le module 20 comporte deux bornes de connexion 21, 25 pouvant fournir une tension électrique et un courant électrique déterminés en fonction du nombre de cellules électriques 23 assemblées en série et/ou en parallèle. A titre d'exemple non limitatif, on a représenté de façon simplifiée le module 20 de cellules unitaires d'un sous-système de batterie pouvant comporter deux rangées 22, 24 montées en parallèle et constituées chacune de quatre cellules électriques unitaires connectées en série. Comme cela est bien connu de l'homme du métier, il est envisageable qu'un sous-système de batterie comporte une unique rangée de cellules unitaires, trois rangées ou plus. Au sein d'un même sous-système de batterie, la configuration des connexions électriques entre les cellules électriques unitaires d'un même module est permanente et non modifiable. Tandis que dans le système de batterie la configuration des connexions électriques entre les sous-systèmes est reconfigurable selon le besoin électrique recherché.

La figure 3 représente un système de batterie 100 selon un mode de réalisation préférentiel de l'invention. Le système de batterie 100 est destiné à équiper un véhicule électrique (100% électrique ou hybride électrique) et est prévu pour être monté amovible dans le véhicule grâce à des interfaces électriques 60, 61, 62, 63 pouvant être branchées et débranchées électriquement avec des systèmes électriques du véhicules, ainsi qu'avec des systèmes externes au véhicule dans le cas d'une interface de recharge à une borne de recharge externe.

Le système de batterie 100 comporte deux sous-systèmes de batterie 200, 300 munis respectivement des deux modules de cellules unitaires 20, 30. Les sous-systèmes de batteries sont agencés pour fonctionner individuellement à des tensions continues comprises entre 200V et 450V. Dans une variante de puissance inférieure, chacun des sous-systèmes de batteries 200, 300 fournit une tension de 48V à ses bornes.

Dans ce mode de réalisation préférentiel, le système de batterie 100 comporte une première interface de recharge 60 destinée à fonctionner avec une borne de recharge externe 70 prévue pour fonctionner selon une tension de recharge compatible de classes de puissance normalisées allant de 10kW à plus de 350kW : FC10, FC20, FC50, HPC150, HPC250, HPC350. Plus précisément, l'interface de recharge 60 est prévue pour fonctionner à des tensions électriques comprises au moins entre 200V et 950V et pouvant supporter des courants électriques maximums de 500A environ. L'interface de recharge 60 est compatible des normes DIN SPEC 70121 (« *Électromobilité* - *Communication digitale entre la borne de recharge à courant continu et le véhicule électrique pour régler la charge à courant continu dans le système de charge combiné* ») et ISO 15118 *(« Véhicules routiers* - *Interface de communication entre véhicule et réseau électrique »).*

Le système de batterie comporte une deuxième interface 61 destinée à connecter électriquement une machine de traction électrique 71 du véhicule. L'interface 61 est une interface consommatrice du fait que la machine électrique de traction prélève de l'énergie électrique restituée par le système de batterie 100. Toutefois, l'interface 61 fonctionne également comme une interface de recharge lorsque la machine de traction électrique fonctionne comme un générateur électrique, en particulier lors d'une phase de freinage récupératif. L'interface 61 est prévue pour fonctionner à une tension comprise entre 200V et 450V ou à une tension de 48V environ pour une application de puissance inférieure.

En outre, le système de batterie comporte une troisième interface 62 destinée à la communication de données avec des circuits 72 de commande électroniques du véhicule, par exemple une unité de contrôle électronique du groupe motopropulseur du véhicule, généralement appelé superviseur. La troisième interface a pour objectif de communiquer les informations d'états du système de batterie 100, tel que l'état de charge (SOC pour « State of Charge » en anglais), l'état de santé (SOH pour « State of Health » en anglais), la tension, le courant et la température des sous-systèmes de batterie pour coordonner son fonctionnement avec les systèmes du véhicule.

En outre, le système de batterie 100 comporte une quatrième interface 63 destinée à connecter électriquement des systèmes électriques 73 comportant au moins un convertisseur de tension DC/DC 731 (continu/continu) pour alimenter un réseau de bord de plus faible tension du véhicule (48V, ou 12V par exemple), tel un compresseur de dispositif de régulation thermique du véhicule permettant de fournir du froid ou du chaud selon le besoin au système de batterie 100.

En outre, le système de batterie comporte des moyens de commande comprenant un dispositif de commande 50 (couramment désigné par l'acronyme BMS pour « Battery Management System » en anglais), de type calculateur à circuit intégré, et des moyens de commutation électronique, dans cette configuration au nombre de neuf, référencés 41, 42, 43, 44, 45, 46, 47, 48, 49. Ces moyens de commutation permettent une pluralité de configurations de connexion électrique entre les sous-systèmes de batterie 200, 300 pour configurer la tension et le courant électrique d'alimentation et de recharge du système de batterie 100, notamment pour la configuration de la tension de recharge avec l'interface de recharge 60 et la tension d'alimentation avec les interfaces 61, 63. A cet effet, le dispositif de commande 50 comporte des moyens de pilotage 51, 52 (couramment désigné par le terme anglais « Driver ») des commutateurs électroniques pour piloter la configuration des connexions entre les sous-systèmes de batterie 200, 300, mais aussi des connexions entre les sous-systèmes de batterie et les interfaces 60, 61, 63, du système de batterie.

Plus précisément, les moyens de commutation électronique 41 à 49 sont des interrupteurs de puissance pilotés, plus précisément des relais de puissance, prévus pour fonctionner avec les interfaces 60, 61, 63, c'est-à-dire à des tensions comprises entre 200V et 950V et pouvant supporter des courants électriques maximum d'environ 500A. Les relais 41 à 49 sont pilotés par les moyens de pilotage 51, 52 du dispositif de commande 50 dans un premier état ouvert empêchant la circulation de courant électrique et dans un deuxième état fermé permettant la circulation d'un courant électrique. Le premier moyen de pilotage 51 pilote l'alimentation des relais 41 à 49, et le deuxième moyen de pilotage 52 pilote le retour à la masse des relais 41 à 48. Les moyens de pilotage 51, 52 sont commandés par des moyens de contrôle du système de batterie 100.

Par ailleurs, le dispositif de commande 50 est en charge d'exécuter les fonctions inhérentes au fonctionnement du système de batterie. Des moyens de pilotage 53, 54 sont en charge d'exécuter les fonctions relatives à la sécurité du système, à son état de charge et à son état de santé. Ces moyens de contrôle communiquent avec les systèmes du véhicule automobile par l'intermédiaire de l'interface interfaces 62 et sont en charge en outre de coordonner le pilotage des moyens de pilotage 51, 52 des relais 41 à 49.

On décrit maintenant plus précisément la disposition des relais 41 à 49 permettant de configurer la connexion en série et en parallèle des sous-systèmes de batterie 200, 300 d'une part, et d'autre part l'alimentation des interfaces 61, 63 à partir d'un seul des deux sous-systèmes de batterie 200, 300 ou à partir des deux sous-systèmes de batterie en parallèle ou en série. Chacun des relais 41 à 49 comporte deux bornes de connexion électrique permettant le passage de courant électrique lorsqu'il est piloté dans un état fermé et permettant de couper le passage de courant électrique lorsqu'il est piloté dans un état ouvert.

Comme cela est illustré sur la figure 3, le premier relais 41 comporte une première borne reliée directement à une borne de connexion 35 du module 30 de cellules unitaires du sous-système de batterie 300. Dans cette configuration, la borne 35 est la borne de pôle négatif du sous-système 300. Le premier relais comporte la deuxième borne reliée directement à une borne de connexion 21 du module 20 de cellules unitaires du sous-système de batterie 200. La borne 21 est la borne de pôle positif du sous-système 200.

Les relais 42, 43, 44 forment partie du sous-système de batterie 200. Le relais 42 comporte une première borne connectée électriquement directement aux interfaces consommatrices 61, 63 et une deuxième borne connectée électriquement directement à la borne 25 de pôle négatif du module 20 de cellules unitaires. Les relais 43, 44 comportent chacun une première borne connectée électriquement directement à la borne 21 de pôle positif du module 20 de cellules unitaires et une deuxième borne connectée électriquement directement aux interfaces consommatrices 61, 63.

Les relais 45, 46, 47 forment partie du sous-système de batterie 300. Le relais 45 comporte une première borne connectée électriquement directement aux interfaces consommatrices 61, 63 et une deuxième borne connectée électriquement directement à la borne 35 de pôle négatif du module 30 de cellules unitaires. Les relais 46, 47 comportent chacun une première borne connectée électriquement directement à la borne 31 de pôle positif du module 30 de cellules unitaires et une deuxième borne connectée électriquement directement aux interfaces consommatrices 61, 63.

Les relais 48, 49 sont en charge de connecter électriquement l'interface de recharge 60 aux sous-systèmes de batterie 200, 300. A cet effet, chacun des deux relais comporte une première borne reliée à l'interface de recharge 60, et le relais 48 comporte la deuxième borne connectée électriquement à la borne 31 de pôle positif du sous-système de batterie 300 et le relais 49 comporte la deuxième borne connectée électriquement à la borne 25 de pôle négatif du sous-système de batterie 200.

Par ailleurs, des fusibles 81, 82, 83, 84 sont disposés dans le système pour assurer la sécurité électrique des connexions. En particulier, chaque sous-système de batterie 200, 300 comporte un fusible de protection.

Le premier relais a pour fonction de piloter la connexion série/parallèle des sous-systèmes de batterie 200, 300 lors de la recharge par l'intermédiaire de l'interface de recharge 60. En particulier, lorsqu'une recharge dite ultra rapide s'opérant à une tension comprise entre 800V et 1000V est commandée, les relais 41, 48, 49 sont pilotés dans un état fermé pour configurer les sous-systèmes de batterie en montage série. Lorsqu'une recharge s'opérant à une tension comprise entre 200V et 450V est commandée, les 48, 49 sont pilotés dans un état fermé et le relais 41 dans un état ouvert de manière à configurer les sous-systèmes de batterie en montage parallèle.

Les interfaces consommatrices 61, 63 sont alimentées par le sous-système de batterie 200 seul lorsque les relais 42, 43 sont fermés (le relais 44 étant fermé de manière temporaire le temps de procéder à une précharge) et les relais 45, 46, 47 sont ouverts. Les interfaces consommatrices sont alimentées par le sous-système de batterie 300 seul lorsque les relais 45, 46 sont fermés ( le relais 47 étant fermé de manière temporaire le temps de procéder à une précharge) et les relais 42, 43, 44 sont ouverts. Les interfaces consommatrices 61, 63 sont alimentées par les deux sous-systèmes de batterie 200 et 300 en parallèle lorsque les relais 42, 43, 45, 46 sont fermés, et le relais 41 ouvert. Les interfaces consommatrices 61, 63 sont alimentées par les deux sous-systèmes de batterie 200, 300 en série lorsque les relais 41, 42, 46 sont fermés, et les relais 43, 45 sont ouverts.

La configuration en série a pour avantage de permettre un fonctionnement du système de batterie à des tensions élevées et permet ainsi de réduire la section des câbles électriques du véhicule. On réduit ainsi le coût d'un véhicule.

Par ailleurs, le système de batterie selon l'invention permet avantageusement d'alterner l'alimentation des interfaces consommatrices durant l'opération d'une recharge de manière à alterner durant la recharge la sollicitation électrique demandée à chacun des sous-systèmes, et donc la montée en température d'un sous-système de batterie lors d'une recharge rapide. Comme on le sait, lors d'une recharge rapide telle celle d'une classe de puissance de 250kW ou 350kW, les sous-systèmes de batterie montent rapidement en température du fait des puissances électriques élevées. Pour les maintenir à une température satisfaisante, il est courant d'activer un dispositif de régulation thermique pour fournir du froid au système de batterie. Dans ce mode de réalisation, le dispositif de régulation thermique est alimenté par l'interface consommatrice 63 qui vient puiser de l'énergie électrique dans un seul des sous-systèmes de batteries 200, 300.

Ainsi lors d'une recharge commandée à la deuxième tension, les relais 42 à 47 des deux sous-systèmes de batterie 200, 300 sont pilotés en coordination par le moyen de pilotage 54 de manière à alimenter sélectivement l'interface consommatrice 63 par un seul desdits au moins deux sous-systèmes de batterie en fonction d'au moins un premier critère de commutation. L'alternance des sollicitations électriques permet d'assurer un vieillissement homogène des sous-systèmes de batterie tout au long de la durée de vie du système. En particulier, alterner les sollicitions lors des recharges électriques est primordial du fait de la montée en température des sous-systèmes lors de ces phases.

Dans un premier mode de pilotage de la commutation des sous-systèmes de batteries 200, 300, un premier critère de commutation est un seuil de protection de température et les moyens de commande sont configurés pour sélectionner le sous-système de batterie sollicité pour l'alimentation de l'interface consommatrice 63 en fonction d'une température estimée de chacun desdits au moins deux sous-systèmes de batterie et du seuil de protection de température.

Par exemple, si une recharge est en cours et que le dispositif de régulation thermique est activé, du fait que les sous-systèmes de batteries ont atteint un seuil de déclenchement du refroidissement, les relais sont pilotés pour alimenter dans un premier temps l'interface 63 par le sous-système de batterie 200. Si la température du sous-système de batterie 200 atteint un seuil de protection déterminé (paramétré en conception dans le moyen de pilotage 54), les relais sont pilotés pour déconnecter le sous-système de batterie 200 de l'interface consommatrice 63, puis pour connecter le sous-système 300 à l'interface consommatrice 63. Pour assurer un refroidissement constant cette opération est coordonnée en fonction de l'état du réseau de bord et d'une batterie du réseau de bord pour assurer le relais d'alimentation durant la commutation des sous-systèmes de batterie 200 à 300.

Dans un deuxième mode de pilotage de la commutation des sous-systèmes de batteries 200, 300, les moyens de commande sont configurés pour sélectionner le sous-système de batterie sollicité pour l'alimentation de l'interface consommatrice 63, parmi lesdits au moins deux sous-systèmes de batterie 200, 300, en fonction d'un deuxième critère de commutation. Ce deuxième critère de commutation est fonction d'un signal permettant d'identifier quel sous-système, parmi les au moins deux sous-systèmes de batterie, a été sollicité lors de la recharge précédente. Ce deuxième critère de commutation permet lors de l'activation du dispositif de régulation thermique de sélectionner le sous-système de batterie qui n'a pas été sollicité lors de la dernière recharge afin d'alterner entre chaque recharge tout au long de la durée de vie du système de batterie les sollicitations électriques lors des recharges. On évite ainsi un déséquilibre lors du vieillissement des sous-systèmes du fait des sollicitations lors des recharges électriques.

Le signal permettant d'identifier le sous-système qui a été sollicité lors de la dernière recharge est par exemple un drapeau, un paramètre d'information ou l'état de signaux électriques de pilotage des relais 41 à 49. Le signal est enregistré par le moyen de pilotage 54 lors de chaque recharge, de préférence lors de l'arrêt de la recharge, pour ensuite sélectionner le sous-système à solliciter lors de la recharge suivante en fonction de ce signal.

Par ailleurs, lors du roulage du véhicule, les moyens de commande sont configurés pour alimenter l'interface 61 d'alimentation de la machine électrique de traction à partir d'un seul des sous-systèmes de batteries, à partir des deux sous-systèmes en parallèle ou à partir des deux sous-systèmes en série, notamment pour fournir des performances électriques élevées.

Une stratégie de contrôle du système batterie prévoit qu'immédiatement à la suite d'une recharge (c'est-à-dire au démarrage et en début de roulage), les moyens de commande du système de batterie 100 alimentent la machine électrique de traction par le sous-système de batterie ayant le niveau de charge le plus élevé (du fait de la sollicitation pour le dispositif de régulation thermique lors de la recharge) jusqu'à la détection d'une condition équilibre électrique entre les deux sous-systèmes (condition de tension de fonctionnement) et alimentent ensuite l'interface de recharge par les deux sous-systèmes en parallèle une fois la condition d'équilibre électrique atteinte.

De plus, lors du roulage les moyens de commutation électronique 41-47 des deux sous-systèmes de batterie 200, 300 sont pilotés de manière à alimenter les interfaces consommatrices 61 et 63 par les deux sous-systèmes de batterie connectés en série en fonction d'un troisième critère de commutation. L'architecture du système de batterie est ainsi compatible d'équipements sur une plage de tension électrique amplifiée sans recours à un convertisseur de tension. L'interopérabilité du système de batterie est ainsi améliorée. De plus, l'architecture permet de déclencher une augmentation de la puissance d'alimentation des équipements électriques.

Plus précisément, une première stratégie de connexion en série lors du roulage consiste à rechercher un effet d'augmentation de la puissance électrique lorsque les sous-systèmes de batterie atteignent un seuil d'état de charge bas prédéterminé (enregistré en mémoire du moyen de pilotage 54). Dans cette situation, le troisième critère de commutation est la détection du seuil d'état de charge bas. Dans ce but, la machine électrique de traction est alimentée par la deuxième tension d'alimentation (entre 400V et 1000) fournie par la connexion en série pour augmenter la puissance du système de batterie en minimisant le courant (effet « boost » en anglais). Cette stratégie est déclenchée pour procurer une accélération du véhicule lors de la détection d'une manoeuvre à forte dynamique, par exemple une manoeuvre d'urgence.

Une deuxième stratégie de connexion en série lors du roulage consiste à alimenter des équipements connectés électriquement à l'interface 61 ou 63, lesdits équipements étant destinés à fonctionner à la deuxième tension d'alimentation comprise entre 400V et 1000V (compresseur, convertisseur de tension, machine électrique de traction). Dans cette situation, le troisième critère de commutation est la détection de l'activation d'un équipement électrique fonctionnant à la deuxième tension électrique.

L'invention prévoit également un procédé de contrôle d'un système de batterie rechargeable pour un véhicule. Le procédé est mis en oeuvre par les moyens de commande du système de batterie et comporte, lors de l'activation d'une recharge opérée par l'intermédiaire de l'interface de recharge 60 à la deuxième tension de recharge (tension supérieure à la tension d'alimentation des interface consommatrice 61, 63) ou lors de la détection d'un besoin d'augmentation de la tension électrique (effet « boost », ou équipement fonctionnant en haute tension pouvant atteindre 1000V), la connexion desdits au moins deux sous-systèmes de batterie en série à l'interface de recharge 60 ou aux interfaces d'alimentation 61, 63.

On a décrit le système de batterie pour une application haute tension (entre 200V et 950V) et pour une recharge pouvant atteindre 350kW. L'homme du métier saura adapter l'invention à une architecture de véhicule en 48V, c'est-à-dire que les interfaces 60, 61, 63 sont prévues pour fonctionner en 48V, tout en permettant une recharge électrique à une tension de 96V ou plus en fonction du nombre de sous-systèmes de batteries. Chacun des sous-systèmes de batterie est prévu dans cette variante pour fonctionner à une tension électrique de 48V.

On a décrit un système de batterie comprenant deux sous-systèmes de batteries individuels, mais il est envisageable d'appliquer l'invention à des systèmes de batteries ayant trois sous-systèmes ou plus. Des moyens de commutation électronique supplémentaires sont alors prévus pour assurer le montage en série de tout ou partie des sous-systèmes de batteries. Le système de batterie s'applique pour tout type de véhicule équipé d'un système de batterie rechargeable, tel un véhicule automobile à deux, trois ou quatre roues motorisées ou plus, mais aussi aux aéronefs de type avion, hélicoptère ou drone, ou les véhicules à traction humaine munis d'un système d'assistance électrique.

L'invention prévoit également un procédé de contrôle du système de batterie rechargeable permettant d'assurer un vieillissement homogène des sous-systèmes de batteries grâce à la possibilité d'alterner les sollicitations électriques lors des recharges.

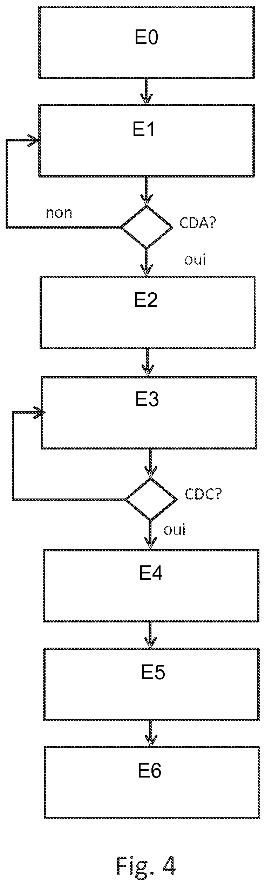

La figure 4 décrit un procédé de contrôle pour un véhicule comprenant au moins deux sous-systèmes de batteries et des moyens de commande pour piloter la configuration de connexion des au moins deux sous-systèmes de batteries à une interface de recharge d'une part, susceptible d'opérer une recharge à une tension de recharge comprise entre 200V et 450V et à une deuxième tension de recharge supérieure à la première tension et comprise entre 450V et 1000V, et à au moins une première interface consommatrice d'autre part, susceptible d'opérer à une tension d'alimentation déterminée (comprise entre 200V et 450V) et destinée à alimenter au moins un dispositif de régulation thermique du système de batterie. Le procédé est exécuté par les moyens de commande du système de batterie et s'applique préférentiellement pour le système de batterie décrit en figure 3.

A une étape initiale E0, le procédé comporte la commande d'une recharge électrique à la deuxième tension de recharge (comprise entre 450V et 1000V par exemple).

Le procédé comporte ensuite la connexion E1 en série des au moins deux sous-systèmes de batterie 200, 300 pour opérer la recharge à la deuxième tension de recharge. Dans ce mode de réalisation, la connexion E1 en série des au moins deux sous-systèmes de batterie 200, 300 comporte le pilotage du relais 41 dans un état fermé par le dispositif de commande 50 pour la configuration série et les relais 48, 49 dans un état fermé pour la connexion à l'interface de recharge 60. A cette phase du procédé, les autres relais peuvent être ouverts si les interfaces consommatrices 61, 63 ne sont pas demandeuse d'une alimentation.

Ensuite, en cas de détection d'une condition d'activation CDA d'un dispositif de régulation thermique du système de batterie, le procédé comporte une étape de détermination E2 d'un critère de sélection CS pour arbitrer le choix du sous-système de batterie pour l'alimentation de la première interface consommatrice 63, et la connexion E3 des bornes du premier sous-système 200 à la première interface consommatrice 63 est fonction du critère de sélection CS.

Le critère de sélection CS a pour objectif d'alterner les sollicitations électriques entre les sous-systèmes d'une charge électrique à une autre de manière à homogénéiser le vieillissement des sous-systèmes du système de batterie. Plus précisément, dans un mode de sélection, le critère de sélection CS est déterminé à partir du signal électronique permettant d'identifier quel sous-système, parmi les au moins deux sous-systèmes de batterie 200, 300, a été sollicité lors de la recharge précédente. Ce signal est un drapeau, un paramètre d'information ou l'état de signaux électriques de pilotage des relais 41 à 49.

Comme on le voit en figure 3, la connexion du sous-système de batterie 200 est opérée en fermant les relais 42, 43, 44, tandis que la connexion du sous-système de batterie 300 est opérée en fermant les relais 45, 46, 47. A cette étape du procédé, un seul sous-système de batterie parmi les au moins deux sous-systèmes du système est sollicité pour le besoin de refroidissement (ou pour un besoin de chauffage si les conditions météorologiques abaissent la température de fonctionnement des sous-systèmes sous un seuil de protection bas). On prend l'hypothèse que le sous-système 200 alimente seul l'interface 63. Le dispositif de régulation thermique est alimenté via le convertisseur de tension DC/DC.

Dans une variante, la connexion E3 est réalisée automatiquement sans prendre en compte l'étape de détermination E2. Cette dernière étape n'est pas obligatoire.

Ensuite, en cas de détection d'une condition de commutation CDC lors de la recharge, le procédé comporte la déconnexion E4 des bornes du sous-système de batterie 200 de l'interface consommatrice 63, puis la connexion E5 des bornes du sous-système 300 à la première interface consommatrice 63. Lors de la commutation, le dispositif de régulation thermique est éteint ou branché sur une alimentation relais (par exemple la batterie du réseau de bord du véhicule) de manière à opérer la reconfiguration des relais en toute sécurité. Une fois que le sous-système de batterie 300 est connecté à l'interface 63, le dispositif de régulation est alimenté par le sous-système 300. La déconnexion E4 est opérée en ouvrant les relais 42, 43, 44, et la connexion du sous-système de batterie 300 est opérée en fermant les relais 45, 46, 47.

Ainsi, grâce au procédé, on alterne les sollicitations électriques qui sont exercées sur les sous-systèmes de batterie. Cette alternance lors des recharges permet d'assurer un vieillissement homogène du système de batterie.

Le procédé prévoit deux modes de contrôle pour déclencher la commutation. Dans un premier mode, la condition de commutation CDC est active lorsque la température estimée du premier sous-système de batterie atteint un seuil de protection de température. Il s'agit typiquement d'une situation de montée en température critique du fait des sollicitations électriques de la recharge électrique et de l'alimentation du système de régulation thermique. Dans cette situation, il est très probable que le sous-système 200 ait atteint une température plus élevée que le sous-système 300, ce dernier n'étant pas sollicité pour restituer de l'énergie électrique.

Dans un deuxième mode, la condition de commutation CDC est active en cas de détection d'un premier état de vieillissement ET1 du sous-système de batterie 200 qui est supérieur à un deuxième état de vieillissement ET2 du deuxième sous-système de batterie. Tant que la température du sous-système de batterie reste dans la plage de température de fonctionnement optimal, le sous-système est maintenu connecté à l'interface consommatrice. Toutefois, si on détecte un état de vieillissement supérieur à l'autre sous-système de batterie, le procédé déclenche la commutation. Si on détecte une température dépassant le seuil de protection, alors le procédé commande l'arrêt de la recharge ou la commutation sur l'autre sous-système de batterie, si celui-ci est en condition électrique et thermique pour alimenter le dispositif de régulation thermique.

Plus précisément, le premier état de vieillissement et le deuxième état de vieillissement ET1, ET2 sont déterminés par une fonction d'évaluation du vieillissement des au moins deux sous-systèmes de batteries mise en oeuvre par le dispositif de commande 50. La fonction d'évaluation du vieillissement analyse les tensions et les courants de sollicitation, le nombre de cycles de recharge au cours de la vie du système de batterie pour générer le premier et deuxième état. Ces fonctions d'évaluation du vieillissement sont connues de l'homme du métier et sont généralement intégrées aux fonctions de pilotage du dispositif de commande pour surveiller l'état de santé des sous-systèmes de batterie.

Finalement, lors de la détection de la fin de la recharge, le procédé comporte en outre la connexion E6 d'un seul sous-système de batterie du système de batterie, celui ayant l'état de charge le plus haut parmi les au moins deux sous-systèmes de batterie, à l'interface consommatrice 61 destinée à alimenter la machine de traction électrique de manière à équilibrer l'état de charge entre les sous-systèmes de batterie lors du début de la phase de roulage. Cette étape permet de décharger dans un premier temps le sous-système de batterie ayant atteint l'état de charge le plus haut (car pas, ou moins sollicité pour la régulation thermique) de manière à atteindre l'équilibre électrique nécessaire pour un fonctionnement en parallèle des sous-systèmes de batterie (équilibre en tension aux bornes des sous-systèmes).

Par ailleurs, lors du roulage, si un des sous-systèmes a atteint un seuil critique de fonctionnement (par exemple, état de fonctionnement détérioré du fait d'un impact sur le sous-système, capacité nominale inférieure à un seuil critique, la résistance interne a dépassé un seuil critique, état de vieillissement supérieur à un seuil critique), le dispositif de commande du système de batterie pilote la déconnexion du sous-système ayant un fonctionnement dégradé, via le pilotage coordonné des relais 42 à 47, tout en continuant d'assurer l'alimentation de l'interface 61 par l'autre sous-système.

## Revendications

1. Système de batterie rechargeable (100) pour un véhicule (10), le système comprenant au moins deux sous-systèmes de batteries (200, 300) pourvus chacun de deux bornes de connexion, des moyens de commande (50, 41-49), au moins une interface de recharge (60) susceptible d'opérer une recharge à une première tension de recharge, au moins une interface consommatrice (63) susceptible d'opérer à une première tension d'alimentation déterminée, et un dispositif de régulation thermique des au moins deux sous-systèmes de batteries (200, 300), les moyens de commande (50, 41-49) étant aptes à connecter en parallèle les bornes desdits au moins deux sous-systèmes de batterie (200, 300) à l'interface de recharge (60) lors d'une recharge du système de batterie et à l'interface consommatrice (63), **caractérisé en ce que** les moyens de commande sont aptes en outre à connecter en série les bornes desdits au moins deux sous-systèmes de batterie (200, 300) à l'interface de recharge (60) lorsqu'une recharge du système de batterie par l'interface de recharge est commandée à une deuxième tension de recharge déterminée et à l'interface consommatrice (63) pour fournir une deuxième tension d'alimentation déterminée, l'interface consommatrice (63) étant un convertisseur de tension (731) alimentant le dispositif de régulation thermique.

2. Système de batterie selon la revendication 1, **caractérisé en ce que** les moyens de commande (50, 41-49) comportent un moyen de commutation électronique (41) reliant une première borne (35) d'un desdits au moins deux sous-systèmes de batterie à une deuxième borne (21), de pôle opposé à la première borne, d'un autre desdits au moins deux sous-systèmes de batterie.

3. Système de batterie selon la revendication 1 ou 2, **caractérisé en ce que** les moyens de commande sont configurés pour alimenter sélectivement l'interface consommatrice (63), lors d'une recharge commandée à la deuxième tension, par un seul desdits au moins deux sous-systèmes de batterie.

4. Système de batterie selon la revendication 3, **caractérisé en ce que** les moyens de commande (50, 41-49) sont configurés pour sélectionner le sous-système de batterie sollicité pour l'alimentation de l'interface consommatrice (63), parmi lesdits au moins deux sous-systèmes de batterie (200, 300), en fonction d'une température estimée de chacun desdits au moins deux sous-systèmes de batterie et d'un seuil de protection de température.

5. Système de batterie selon la revendication 3 ou 4, **caractérisé en ce que** les moyens de commande (50, 41-49) sont configurés pour sélectionner le sous-système de batterie sollicité pour l'alimentation de l'interface consommatrice (63), parmi lesdits au moins deux sous-systèmes de batterie (200, 300), en fonction d'un signal permettant d'identifier quel sous-système, parmi les au moins deux sous-systèmes de batterie, a été sollicité lors de la recharge précédente.

6. Système de batterie selon l'une quelconque des revendications 1 à 5, **caractérisé en ce que** les moyens de commande sont configurés en outre pour alimenter, lors du roulage, l'interface consommatrice (63) par les au moins deux sous-systèmes de batterie (200, 300) connectés en série lorsque les sous-systèmes de batterie atteignent un seuil d'état de charge prédéterminé.

7. Système de batterie selon l'une quelconque des revendications 1 à 6, **caractérisé en ce que** la tension de fonctionnement de chacun des au moins deux sous-systèmes de batterie (200, 300) est comprise entre 200V et 450V et la tension de fonctionnement des au moins deux sous-systèmes de batterie lorsqu'ils sont connectés en série est comprise entre 400V et 1000V.

8. Système de batterie selon l'une quelconque des revendications 1 à 7, **caractérisé en ce qu'**il comporte au moins deux interfaces consommatrices (61, 63), une première interface (61) étant destinée à être reliée électriquement à une machine de traction électrique du véhicule et une deuxième interface (63) étant le convertisseur de tension (731).

9. Système de batterie selon la revendication 8, **caractérisé en ce que** chacune des interfaces consommatrices (61, 63) est apte à fonctionner à une tension comprise entre 200V et 1000V, ou à une tension de 48V.

10. Véhicule automobile, **caractérisé en ce qu'**il comporte un système de batterie (100) selon l'une quelconque des revendications 1 à 9.

11. Procédé de contrôle du système de batterie rechargeable selon l'une des revendications précédentes, **caractérisé en ce qu'**il comporte, lors de l'activation d'une recharge opérée par l'intermédiaire de l'interface de recharge (60) à la deuxième tension (E0), la connexion (E1) desdits au moins deux sous-systèmes (200, 300) de batterie en série à l'interface de recharge (60) et, en cas de détection d'une condition d'activation (CDA) du dispositif de régulation thermique, comprend une étape pour commander l'alimenter du dispositif de régulation thermique à la deuxième tension d'alimentation déterminée ou à la première tension d'alimentation déterminée selon respectivement que le procédé détecte un besoin d'augmentation de la tension électrique pour alimenter l'interface consommatrice (63) ou pas.

12. Procédé selon la revendication 11, l'interface consommatrice (63) étant alimenté à la première tension d'alimentation déterminée, **caractérisé en ce qu'**il arbitre le choix du sous-système de batterie (200, 300) pour l'alimentation de l'interface consommatrice (63) en fonction d'un état de vieillissement et d'une température de chacun des sous-systèmes (200, 300) du système de batterie.

## Patentansprüche

1. Wiederaufladbares Batteriesystem (100) für ein Fahrzeug (10), wobei das System mindestens zwei Batterieteilsysteme (200, 300) mit jeweils zwei Anschlussklemmen, Steuermitteln (50, 41-49) und mindestens einer Ladeschnittstelle umfasst (60), die mit einer ersten Ladespannung betrieben werden kann, mindestens eine Verbraucherschnittstelle (63), die mit einer ersten bestimmten Versorgungsspannung betrieben werden kann, und eine thermische Regelungseinrichtung der mindestens zwei Batterieteilsysteme (200, 300), die Steuerung Mittel (50, 41-49), die in der Lage sind, die Anschlüsse der mindestens zwei Batterieteilsysteme (200, 300) während des Aufladens des Batteriesystems und an der Verbraucherschnittstelle (63) parallel mit der Ladeschnittstelle (60) zu verbinden, **dadurch gekennzeichnet, dass** die Steuermittel weiterhin in der Lage sind, die Anschlüsse der mindestens zwei Unterbatteriesysteme (200, 300) an der Ladeschnittstelle (60) in Reihe zu schalten, wenn das Laden des Batteriesystems über die Ladeschnittstelle bei a gesteuert wird ermittelte zweite Ladespannung und an der Verbraucherschnittstelle (63) eine zweite ermittelte Versorgungsspannung bereitzustellen, wobei die Verbraucherschnittstelle (63) einen Spannungswandler (731) zur Versorgung der thermischen Regelungseinrichtung aufweist.

2. Batteriesystem nach Anspruch 1, **dadurch gekennzeichnet, dass** die Steuermittel (50, 41-49) ein elektronisches Schaltmittel (41) umfassen, das einen ersten Anschluss (35) eines der mindestens zwei Unterbatteriesysteme mit einem verbindet zweiten Anschluss (21) mit entgegengesetztem Pol zum ersten Anschluss eines anderen der mindestens zwei Batterieuntersysteme.

3. Batteriesystem nach Anspruch 1 oder 2, **dadurch gekennzeichnet, dass** die Steuermittel dazu ausgelegt sind, die Verbraucherschnittstelle (63) während einer auf der zweiten Spannung gesteuerten Wiederaufladung selektiv durch nur eines der mindestens zwei Batterieteilsysteme zu versorgen.

4. Batteriesystem nach Anspruch 3, **dadurch gekennzeichnet, dass** die Steuermittel (50, 41-49) so konfiguriert sind, dass sie aus den mindestens zwei Batteriesubsystemen (200, 300) das für die Stromversorgung der Verbraucherschnittstelle (63) angeforderte Batteriesubsystem auswählen), basierend auf einer geschätzten Temperatur jedes der mindestens zwei Batterieteilsysteme und einem Temperaturschutzschwellenwert.

5. Batteriesystem nach Anspruch 3 oder 4, **dadurch gekennzeichnet, dass** die Steuermittel (50, 41-49) so konfiguriert sind, dass sie aus den mindestens zwei Batteriesubsystemen (200) das für die Stromversorgung der Verbraucherschnittstelle (63) angeforderte Batteriesubsystem auswählen, 300), abhängig von einem Signal, das es ermöglicht, zu identifizieren, welches der mindestens zwei Batterie-Subsysteme beim Wiederaufladen angefordert wurde.

6. Batteriesystem nach einem der Ansprüche 1 bis 5, **dadurch gekennzeichnet, dass** die Steuermittel weiterhin dazu ausgelegt sind, die Verbraucherschnittstelle (63) während der Fahrt durch die mindestens zwei in Reihe geschalteten Teilsystembatterien (200, 300) zu versorgen wenn die Batterie-Subsysteme einen vorgegebenen Ladezustandsschwellenwert erreichen.

7. Batteriesystem nach einem der Ansprüche 1 bis 6, **dadurch gekennzeichnet, dass** die Betriebsspannung jedes der mindestens zwei Batterieteilsysteme (200, 300) zwischen 200V und 450V liegt und der Betriebsspannung der mindestens zwei Batterie entspricht Die Spannung der in Reihe geschalteten Subsysteme liegt zwischen 400 V und 1000 V.

8. Batteriesystem nach einem der Ansprüche 1 bis 7, **dadurch gekennzeichnet, dass** es mindestens zwei Verbraucherschnittstellen (61, 63) umfasst, wobei eine erste Schnittstelle (61) zur elektrischen Verbindung mit einer elektrischen Antriebsmaschine vorgesehen ist das Fahrzeug und eine zweite Schnittstelle (63), die der Spannungswandler (731) ist.

9. Batteriesystem nach Anspruch 8, **dadurch gekennzeichnet, dass** jede der Verbraucherschnittstellen (61, 63) in der Lage ist, mit einer Spannung zwischen 200 V und 1000 V oder mit einer Spannung von 48 V zu arbeiten.

10. Kraftfahrzeug, **dadurch gekennzeichnet, dass** es ein Batteriesystem (100) nach einem der Ansprüche 1 bis 9 umfasst.

11. Verfahren zur Steuerung des Akkusystems nach einem der vorhergehenden Ansprüche, **dadurch gekennzeichnet, dass** es bei Aktivierung eine über die Nachladeschnittstelle (60) durchgeführte Nachladung mit der zweiten Spannung (E0) umfasst, wobei der Anschluss (E1) der mindestens zwei Batterie-Subsysteme (200, 300) in Reihe zur Ladeschnittstelle (60) geschaltet ist und im Falle der Erkennung einer Aktivierungsbedingung (CDA) der Wärmeregulierungseinrichtung einen Schritt zur Steuerung der Stromversorgung umfasst die Wärmeregulierungseinrichtung bei der zweiten bestimmten Versorgungsspannung oder bei der ersten bestimmten Versorgungsspannung, je nachdem, ob das Verfahren einen Bedarf für eine Erhöhung der elektrischen Spannung zur Stromversorgung der Verbraucherschnittstelle (63) erkennt oder nicht.

12. Verfahren nach Anspruch 11, wobei die Verbraucherschnittstelle (63) mit der ersten ermittelten Versorgungsspannung versorgt wird, **dadurch gekennzeichnet, dass** es die Wahl des Batteriesubsystems (200, 300) für die Stromversorgung der Verbraucherschnittstelle (63) arbitriert. als Funktion eines Alterungszustands und einer Temperatur jedes der Subsysteme (200, 300) des Batteriesystems.

## Claims

1. Rechargeable battery system (100) for a vehicle (10), the system comprising at least two battery subsystems (200, 300) each provided with two connection terminals, control means (50, 41-49 ), at least one charging interface (60) capable of operating at a first charging voltage, at least one consumer interface (63) capable of operating at a first determined supply voltage, and a regulation device thermal of the at least two battery subsystems (200, 300), the control means (50, 41-49) being able to connect in parallel the terminals of said at least two battery subsystems (200, 300) to the charging interface (60) during recharging of the battery system and at the consumer interface (63), **characterized in that** the control means are further capable of connecting in series the terminals of said at least two sub -battery systems (200, 300) at the charging interface (60) when charging of the battery system via the charging interface is controlled at a determined second charging voltage and at the consumer interface (63) to provide a second determined supply voltage, the consumer interface (63) being a voltage converter (731) supplying the thermal regulation device.

2. Battery system according to claim 1, **characterized in that** the control means (50, 41-49) comprise an electronic switching means (41) connecting a first terminal (35) of one of said at least two sub- battery systems with a second terminal (21), of pole opposite to the first terminal, of another of said at least two battery subsystems.

3. Battery system according to claim 1 or 2, **characterized in that** the control means are configured to selectively supply the consumer interface (63), during a recharge controlled at the second voltage, by only one of said at least two battery subsystems.

4. Battery system according to claim 3, **characterized in that** the control means (50, 41-49) are configured to select the battery subsystem requested for powering the consumer interface (63), among said at least two battery subsystems (200, 300), based on an estimated temperature of each of said at least two battery subsystems and a temperature protection threshold.

5. Battery system according to claim 3 or 4, **characterized in that** the control means (50, 41-49) are configured to select the battery subsystem requested for powering the consumer interface (63) , among said at least two battery subsystems (200, 300), depending on a signal making it possible to identify which subsystem, among the at least two battery subsystems, was requested during recharging former.

6. Battery system according to any one of claims 1 to 5, **characterized in that** the control means are further configured to supply, during driving, the consumer interface (63) by the at least two subsystems batteries (200, 300) connected in series when the battery subsystems reach a predetermined state of charge threshold.

7. Battery system according to any one of claims 1 to 6, **characterized in that** the operating voltage of each of the at least two battery subsystems (200, 300) is between 200V and 450V and the voltage of operation of the at least two battery subsystems when connected in series is between 400V and 1000V.

8. Battery system according to any one of claims 1 to 7, **characterized in that** it comprises at least two consumer interfaces (61, 63), a first interface (61) being intended to be electrically connected to a processing machine. electric traction of the vehicle and a second interface (63) being the voltage converter (731).

9. Battery system according to claim 8, **characterized in that** each of the consumer interfaces (61, 63) is capable of operating at a voltage between 200V and 1000V, or at a voltage of 48V.

10. Motor vehicle, **characterized in that** it comprises a battery system (100) according to any one of claims 1 to 9.

11. Method for controlling the rechargeable battery system according to one of the preceding claims, **characterized in that** it comprises, upon activation, a recharge carried out via the recharge interface (60) at the second voltage (E0), the connection (E1) of said at least two battery subsystems (200, 300) in series to the charging interface (60) and, in the event of detection of an activation condition (CDA) of the thermal regulation device, comprises a step for controlling the power supply of the thermal regulation device at the second determined supply voltage or at the first determined supply voltage depending respectively on whether the method detects a need for an increase of the electrical voltage to power the consumer interface (63) or not.

12. Method according to claim 11, the consumer interface (63) being powered at the first determined supply voltage, **characterized in that** it arbitrates the choice of the battery subsystem (200, 300) for the power supply of the consumer interface (63) as a function of an aging state and a temperature of each of the subsystems (200, 300) of the battery system.
